# NEUE EUROPÄISCHE PATENTSCHRIFT

(11) **EP 1 222 389 B2**
(45) Veröffentlichungstag und Bekanntmachung des Hinweises auf die Entscheidung über den Einspruch: **02.03.2016**
(45) Hinweis auf die Patenterteilung: 18.06.2003
(21) Anmeldenummer: 00954452.9
(22) Anmeldetag: 08.07.2000
(51) Int. Cl.: F02N 11/08

(54) **VERFAHREN ZUM BETRIEB EINES WINDPARKS**
METHOD FOR OPERATING A WIND FARM
PROCEDE DE FONCTIONNEMENT D'UN PARC EOLIEN

(30) Priorität: 06.10.1999 DE 19948196
(43) Veröffentlichungstag der Anmeldung: 17.07.2002
(73) Patentinhaber: Wobben, Aloys, 26607 Aurich (DE)
(72) Erfinder: Wobben, Aloys, 26607 Aurich (DE)
(74) Vertreter: Eisenführ Speiser
(86) Internationale Anmeldenummer: PCT/EP2000/006493
(87) Internationale Veröffentlichungsnummer: WO 2001/025630

(56) Entgegenhaltungen:
- EP-A- 0 072 598
- WO-A-90/07823
- DE-A- 2 751 228
- DE-A- 19 620 906

## Beschreibung

Die Erfindung betrifft ein Verfahren zum Betrieb eines Windparks sowie auch einen Windpark als solchen.

Windenergieanlagen wurden zunächst immer singulär aufgestellt und erst in den letzten Jahren werden - verursacht auch durch Verwaltungs- und Bauvorschriften - Windenergieanlagen häufig in Windparks installiert. Ein Windpark ist hierbei in seiner kleinsten Einheit eine Anordnung von wenigstens zwei Windenergieanlagen, häufig aber deutlich mehr. Beispielhaft sei der Windpark Holtriem (Ostfriesland) genannt, wo mehr als 50 Windenergieanlagen in einem Verbund aufgestellt sind. Es ist zu erwarten, daß die Stückzahl als auch die installierte Leistung der Windenergieanlagen auch in den weiteren Jahren noch stark ansteigen wird. In den meisten Fällen ist das Windpotential in Bereichen der Versorgungsnetze mit kleiner Kurzschlußleistung und geringer Bevölkerungsdichte am größten. Gerade dort werden die technischen Anschlußgrenzen durch die Windenergieanlagen rasch erreicht mit der Folge, daß an solchen Standorten dann keine weiteren Windenergieanlagen mehr aufgestellt werden können. Ein Windpark und ein Verfahren zum Betrieb eines Windparks sind ebenfalls aus der DE 196 20 906 A1 bekannt.

Ein konventioneller Windpark, der beispielsweise an ein Umspannwerk mit 50 MW angeschlossen wird, kann daher maximal nur 50 MW Gesamtleistung haben, d.h. z.B. 50 Windenergieanlagen mit jeweils 1 MW Nennleistung.

Eingedenk dessen, daß die Windenergieanlagen nicht ständig im Nennbetrieb betrieben werden und somit der gesamte Windpark auch nicht ständig seine maximale Leistung (Nennleistung) erreicht, kann man feststellen, daß der Windpark nicht optimal ausgenutzt wird, wenn die Nennleistung des Windparks der maximal möglichen einzuspeisenden Gesamtleistung entspricht.

Die Erfindung schlägt demgemäß eine Lösung vor, bei der der Windpark mit einer Gesamtleistung ausgestattet wird, die höher ist als die maximal mögliche Netzeinspeiseleistung. Auf das vorgenannte Beispiel übertragen, kann die Leistung auf einen Wert von über 50 MW, z. B 53 MW angehoben werden. Sobald die Windgeschwindigkeiten hoch genug sind, um die Grenzleistung von 50 MW zu erzeugen, greift die erfindungsgemäße Windparkregelung ein und regelt einzelne oder alle Anlagen bei Überschreitung der Gesamt-Maximalleistung derart ab, daß diese immer eingehalten wird. Dies bedeutet, daß bei Windgeschwindigkeiten über Nennwind (Windgeschwindigkeit, bei der eine Windenergieanlage ihre Nennleistung erreicht) wenigstens eine oder alle Anlagen mit einer (leicht) gedrosselten Leistung betrieben werden (beispielsweise mit einer Leistung von 940 kW anstatt von 1 MW).

Die Vorteile der Erfindung liegen auf der Hand. Insgesamt können die Netzkomponenten des Einspeisenetzes (Netzkomponenten sind z. B der Transformator und die Leitungen) optimal ausgenutzt bzw. ausgelastet werden (es ist auch eine Ausnutzung bis zur thermischen Grenze möglich). Somit können vorhandene Windparkflächen besser ausgenutzt werden durch die Aufstellung einer maximal möglichen Anzahl von Windenergieanlagen. Die Anzahl ist dann nicht mehr (so stark) durch die vorhandene Netzwerkkapazität begrenzt.

Zur Steuerung/Regelung einer Windenergieanlage ist es zweckmäßig, wenn diese über einen Dateneingang verfügt, mittels/über den die elektrische Leistung in einem Bereich von 0 bis 100% (bezogen auf die Nennleistung) eingestellt werden kann. Wird an diesen Dateneingang z. B ein Sollwert von 350 kW angelegt, so wird die maximale Leistung dieser Windenergieanlage den Sollwert von 350 kW nicht überschreiten. Jeder Wert von 0 bis zur Nennleistung (z. B. von 0 bis 1 MW) ist als Sollwert möglich.

Dieser Dateneingang kann direkt zur Leistungsbegrenzung benutzt werden.

Es kann aber auch mit Hilfe eines Reglers die Generatorleistung in Abhängigkeit der Netzspannung (im Windparknetz oder im Einspeisenetz) geregelt werden.

Eine weitere wichtige Funktion wird im folgenden anhand einer Windparkregelung erläutert. Es sei beispielsweise angenommen, daß ein Windpark aus 10 Windenergieanlagen besteht, die jeweils über eine Nennleistung von 600 kW verfügen. Aufgrund der Kapazitäten der Netzkomponenten (Leitungskapazitäten) oder der begrenzten Kapazitäten im Umspannwerk sei ferner angenommen, daß die maximal abzugebende Leistung (Grenzleistung) auf 5200 kW begrenzt ist.

Es gibt nun die Möglichkeit, alle Windenergieanlagen auf eine Maximalleistung von 520 kW mit Hilfe des Sollwertes (Dateneingang) zu begrenzen. Damit ist die Forderung zur Begrenzung der abzugebenden Leistung stets erfüllt.

Eine andere Möglichkeit besteht darin, die maximale Leistung als Summe aller Anlagen nicht überschreiten zu lassen, gleichzeitig aber ein Maximum an Energie (kW-Stunden (Arbeit)) zu erzeugen.

Hierzu sollte man wissen, daß bei geringen bis mäßigen Windgeschwindigkeiten innerhalb des Windparks es häufig vorkommt, daß die Windenergieanlagen an den günstigen (guten) Standorten (das sind die Standorte, auf die der Wind innerhalb des Windparks zuerst trifft) viel Wind bekommen. Werden nun alle Windenergieanlagen gleichzeitig auf ihren gedrosselten Wert heruntergeregelt (z. B. alle auf 520 kW), wird diese erzeugte Leistung zwar von einigen an guten Standorten angeordneten Windenergieanlagen erreicht, einige andere Windenergieanlagen, die jedoch im "Windschatten" der gut lokalisierten Windenergieanlagen stehen (in der zweiten und dritten Reihe) haben weniger Wind und arbeiten dadurch z. B. nur mit 460 kW Leistung und erreichen nicht den Wert der maximal gedrosselten Leistung von 520 kW. Die erzeugte Gesamtleistung des Windparks liegt demgemäß also wesentlich unterhalb der erlaubten Grenzleistung von 5200 kW.

Die erfindungsgemäße Windparkleistungsregelung regelt in diesem Fall die einzelnen Anlagen so, daß der maximal mögliche Energieertrag sich einstellt. Das bedeutet konkret, daß z. B die Anlagen in der ersten Reihe (also an guten Standorten) auf eine höhere Leistung, z. B. auf die Nennleistung geregelt werden (also keine Drosselung). Somit steigt die gesamte elektrische Leistung im Windpark an. Die Parkregelung regelt jedoch jede einzelne Anlage so, daß die maximal erlaubte elektrische Anschlußleistung nicht überschritten wird, während gleichzeitig die erzeugte Arbeit (kWh) einen maximalen Wert erreicht.

Das erfindungsgemäße Windparkmanagement läßt sich leicht an die jeweiligen sich einstellenden Situationen anpassen. So kann beispielsweise sehr einfach eine andere Drosselung der Leistung einzelner Anlagen vorgenommen werden, wenn eine einzelne oder mehrere Anlagen eines Windparks vom Netz genommen werden (müssen), sei aus Wartungsgründen oder aus anderen Gründen eine einzelne oder mehrere Anlagen vorübergehend stillgelegt werden müssen.

Zur Steuerung/Regelung des Windparks bzw. der einzelnen Anlagen kann eine Daten/Steuerungsverarbeitungseinrichtung verwendet werden, welche mit den Dateneingängen der Anlagen verbunden ist und aus den Windgeschwindigkeitsdaten, die (von jeder Anlage) ermittelt werden, den jeweils günstigsten Leistungsdrosselungswert für eine einzelne Anlage bzw. den gesamten Windpark ermittelt.

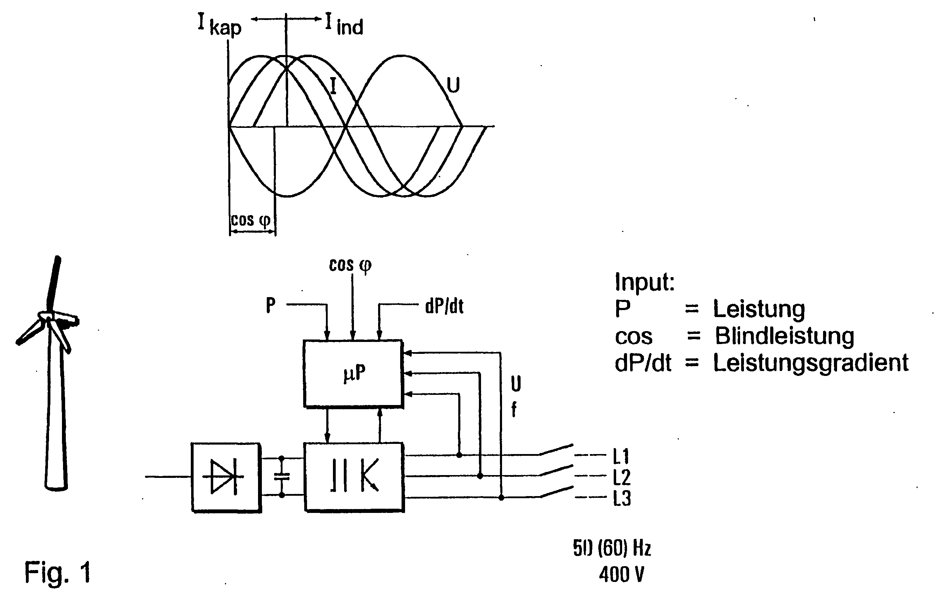

Die Figur 1 zeigt im Blockschaltbild die Steuerung einer Windenergieanlage mittels eines Mikroprozessors µP, welcher mit einer Wechselrichtereinrichtung (PWR) verbunden ist, mittels welchem mehrphasiger Wechselstrom in ein Versorgungsnetz eingespeist werden kann. Der Mikroprozessor verfügt über einen Leistungseingabeeingang P, einen Eingang zur Eingabe eines Leistungsfaktors (cos ϕ) sowie einen Eingang zur Eingabe des Leistungsgradienten (dP/dt).

Die Wechselrichtereinrichtung, bestehend aus einem Gleichrichter, einem Gleichstromzwischenkreis und einem Wechselrichter ist mit dem Generator einer Windenergieanlage verbunden und erhält von dieser die vom Generator erzeugte Energie drehzahlvariabel, d. h. in Anabhängigkeit der Drehzahl des Rotors der Windenergieanlage.

Die in der Figur dargestellte Konzeption dient zur Erläuterung, wie die von einer Windenergieanlage abgegebene Leistung in ihrem Betrag auf einen maximal möglichen Netzeinspeisewert begrenzt werden kann.

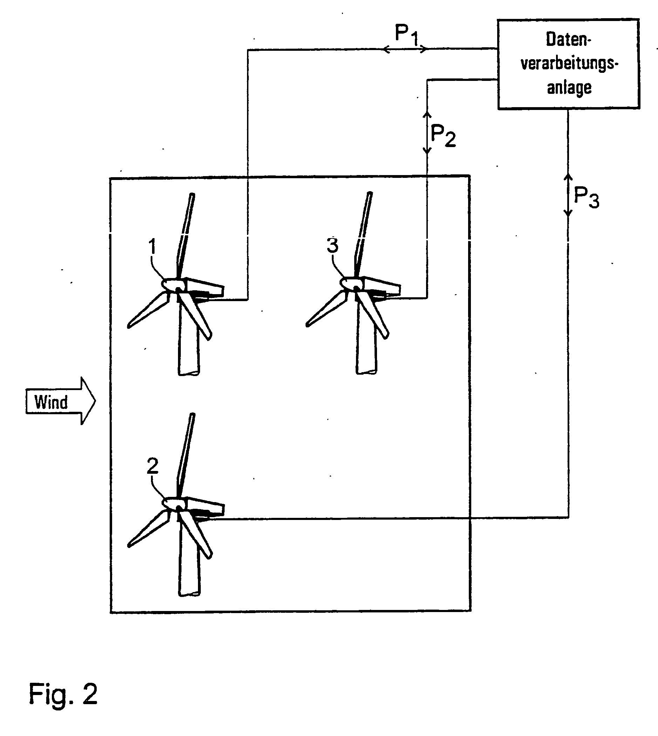

Die Figur 2 zeigt die Prinzipdarstellung eines Windparks, bestehend aus beispielhaft drei Windenergieanlagen 1, 2 und 3, von denen - aus der Windrichtung betrachtet - zwei nebeneinander stehen und die dritte hinter den ersten beiden platziert ist. Da jeder der einzelnen Windenergieanlagen über einen Leistungseingang zur Einstellung der Leistung der jeweiligen Anlage verfügt (Fig. 1), kann mittels einer Datenverarbeitungseinrichtung mittels der der gesamte Windpark gesteuert wird jeweils die Leistungen einer einzelnen Windenergieanlage auf einen gewünschten Wert eingestellt werden. In der Figur 2 sind die günstigen Standorte der Windenergieanlagen diejenigen, auf die der Wind zuerst trifft, also die Anlage 1 und 2.

## Patentansprüche

1. Verfahren zum Betrieb eines Windparks, bestehend aus wenigstens zwei Windensrgieanlagen, wobei die von den Windenergieanlagen abgegebene Leistung in ihrem Betrag auf eine maximal mögliche Energieeinspeiseleistung begrenzt wird, welche geringer ist als der maximal mögliche Wert der abzugebenen Leistung (Nennleistung) und dass die maximal mögliche Energieeinspeiseleistung bestimmt ist durch die Aufnahmekapazität (Leitungskapazität) des Energieversorgungsnetzes, in welches die Energie eingespeist wird und/oder durch die Leistungskapazität der Energieübertragungseinheit bzw. des Transformators, mittels dem die von der Windenergieanlage erzeugte Energie in das Energieversorgungsnetz eingespeist wird und die Windenergieanlagen, die dem Wind innerhalb des Windparks zuerst ausgesetzt sind, in ihrer Leistung weniger begrenzt werden als Windenergieanlagen, die in Windrichtung hinter den vorgenannten Windenergieanlagen stehen.

2. Windpark, bestehend aus mindestens zwei Windenergieanlagen, mit einem maximalen möglichen Wert der abzuziehenden Leistung (Nennleistung), welche größer ist als die Leistung, welche maximal in das Energieversorgungsnetz, an welches der Windpark angeschlossen ist, eingespeist werden kann,
**dadurch gekennzeichnet, dass** diese maximal mögliche Energieeinspeiseleistung bestimmt ist durch die Aufnahmekapazität (Leistungskapazität) des Energieversorgungsnetzes, in welches der Windpark angeschlossen ist und/oder durch die Leistungskapazität der Energieübertragungseinheit bzw. des Transformators, mittels dem die von den Windenergieanlagen erzeugte Energie in das Energieversorgungsnetz eingespeist wird und die Windenergieanlagen, die dem Wind innerhalb des Windparks zuerst ausgesetzt sind, in ihrer Leistung weniger begrenzt werden als Windenergieanlagen, die in Windrichtung hinter den vorgenannten Windenergieanlagen stehen.

3. Windpark nach Anspruch 2,
**dadurch gekennzeichnet, dass** die Leistung wenigstens einer oder mehrerer Windenergieanlagen oder aller Windenergieanlagen des Windparks gedrosselt wird, wenn die maximal mögliche Einergieeinspeiseleistung erreicht wird.

4. Windpark nach einem der Ansprüche 2 bis 3,
**dadurch gekennzeichnet, dass** wenigstens eine Windenergieanlage des Windparks über einen Dateneingang verfügt, mittels dem die elektrische Leistung der Windenergleanlage in einem Bereich von 0 bis 100% der jeweiligen Nennleistung eingestellt werden kann und dass eine Datenverarbeitungseinrichtung vorgesehen ist, welche mit dem Dateneingang verbunden ist und mittels welcher der Stellwert im Bereich von 0 bis 100% eingestellt wird, je nachdem wie groß die Leistung ist, die der gesamte Windpark an seinem Ausgang für die Einspeisung in ein Energienetz zur Verfügung stellt.

## Claims

1. Method for operating a wind farm, consisting of at least two wind energy installations, with the magnitude of the power which is emitted from the wind energy installations being limited to a maximum possible power input level which is less than the maximum possible value of the power which is to be emitted (rating), and in that the maximum possible energy input level is governed by the draw capacity (line capacity) of the power supply network into which the power is fed and/or by the power capacity of the power transmission unit or of the transformer by means of which the power which is produced by the wind energy installation is fed into the power supply network, and the wind energy installations which are subjected to the wind first of all within the wind farm have their power limited to a lesser extent than wind energy installations which are downstream from the abovementioned wind energy installations in the wind direction.

2. Wind farm, consisting of at least two wind energy installations, having a maximum possible value of the power level (rating) which is to be emitted which is greater than the power which can be fed as a maximum into the power supply network to which the wind farm is connected,
**characterized in that** this maximum possible power input level is governed by the draw capacity (power capacity) of the power supply network into which the wind farm is connected and/or by the power capacity of the power transmission unit or of the transformer by means of which the power which is produced by the wind energy installations is fed into the power supply network, and the wind energy installations which are subjected to the wind first of all within the wind farm have their power limited to a lesser extent than wind energy installations which are downstream from the abovementioned wind energy installations in the wind direction.

3. Wind farm according to Claim 2,
**characterized in that** the power of at least one or more wind energy installations or of all the wind energy installations in the wind farm is constrained if the maximum possible power input level is reached.

4. Wind farm according to one of Claims 2 to 3,
**characterized in that** at least one wind energy installation in the wind farm has a data input by means of which the electrical power of the wind energy installation can be set in a range from 0 to 100% of the respective rating, and **in that** a data processing device is provided which is connected to the data input and by means of which the set value is adjusted in the range from 0 to 100% depending on the magnitude of the power which the entire wind farm makes available at its output for feeding into a power network.

## Revendications

1. Procédé de fonctionnement d'un parc d'éoliennes comprenant au moins deux éoliennes, la valeur de la puissance délivrée par les éoliennes étant limitée à une puissance d'alimentation en énergie maximale possible qui est inférieure à la valeur maximale possible de la puissance à délivrer (puissance nominale) et la puissance d'alimentation en énergie maximale possible étant déterminée par la capacité d'absorption (capacité nominale) du réseau d'alimentation en énergie auquel l'énergie est alimentée et/ou par la capacité nominale de l'unité de transfert d'énergie ou du transformateur à l'aide duquel l'énergie générée par l'éolienne est alimentée au réseau d'alimentation en énergie et la puissance des éoliennes, qui sont les premières à être exposées au vent à l'intérieur du parc d'éoliennes, est moins limitée que celle des éoliennes qui, dans le sens du vent, se trouvent derrière les éoliennes précitées.

2. Parc d'éoliennes comprenant au moins deux éoliennes, avec une valeur maximale possible de la puissance à extraire (puissance nominale) qui est supérieure à la puissance qui peut être alimentée au maximum au réseau d'alimentation en énergie auquel est raccordé le parc d'éoliennes, **caractérisé en ce que** cette puissance d'alimentation en énergie maximale possible est déterminée par la capacité d'absorption (capacité nominale) du réseau d'alimentation en énergie auquel est raccordé le parc d'éoliennes et/ou par la capacité nominale de l'unité de transfert d'énergie ou du transformateur à l'aide duquel l'énergie générée par les éoliennes est alimentée au réseau d'alimentation en énergie, la puissance des éoliennes, qui sont les premières à être exposées au vent à l'intérieur du parc d'éoliennes, est moins limitée que celle des éoliennes qui, dans le sens du vent, se trouvent derrière les éoliennes précitées.

3. Parc d'éoliennes selon la revendication 2, **caractérisé en ce que** la puissance d'au moins une ou plusieurs éoliennes ou de toutes les éoliennes du parc d'éoliennes est étranglée lorsque la puissance d'alimentation en énergie maximale possible est atteinte.

4. Parc d'éoliennes selon l'une quelconque des revendications 2 et 3, **caractérisé en ce qu'**au moins une éolienne du parc d'éoliennes est pourvue d'une entrée de données à l'aide de laquelle la puissance électrique de l'éolienne peut être réglée dans une plage comprise entre 0 et 100% de la puissance nominale respective et **en ce qu'**il est prévu un dispositif de traitement des données qui est connecté à l'entrée de données et par l'intermédiaire duquel la valeur de réglage est réglée dans la plage comprise entre 0 et 100%, en fonction de la grandeur de la puissance mise à disposition par le parc d'éoliennes à sa sortie pour l'alimentation d'un réseau fournisseur d'énergie.
